# FASCICULE DE BREVET EUROPEEN

(11) **EP 1 226 098 B1**
(45) Date de publication et mention de la délivrance du brevet: **03.03.2004**
(21) Numéro de dépôt: 00974634.8
(22) Date de dépôt: 02.11.2000
(51) Int. Cl.: C03C 27/00, C09J 5/00

(54) **PROCEDE D'ASSEMBLAGE D'ELEMENTS A RENFORT PAR COLLE ET DISPOSITIF OBTENU PAR LE PROCEDE**
VERBINDUNGSVERFAHREN VON VERSTÄRKUNGSELEMENTEN MIT KLEBSTOFF UND DURCH DIESES VERFAHREN HERGESTELLTE VORRICHTUNG
METHOD FOR ASSEMBLING REINFORCING ELEMENTS BY BONDING AND DEVICE OBTAINED BY SAID METHOD

(30) Priorité: 03.11.1999 FR 9913718
(43) Date de publication de la demande: 31.07.2002
(73) Titulaire: COMMISSARIAT A L'ENERGIE ATOMIQUE, 75752 Paris Cédex 15 (FR)
(72) Inventeur: RABAROT, Marc, F-38120 Saint-Egreve (FR); FRANCOIS, Bernard, F-38340 Voreppe (FR)
(74) Mandataire: Weber, Etienne Nicolas
(86) Numéro de dépôt international: PCT/FR2000/003055
(87) Numéro de publication internationale: WO 2001/032579

(56) Documents cités:
- EP-A- 0 368 728
- FR-A- 1 210 562

## Description

### Domaine technique

La présente invention concerne un procédé de réalisation de composants par assemblage de deux ou de plusieurs éléments de structure et un dispositif obtenu au terme de l'assemblage desdits éléments.

L'invention trouve des applications dans les domaines de la micro-électronique, de la micro-mécanique et de la micro-optique.

En particulier, dans le domaine de la micro-optique, l'invention peut être avantageusement mise en oeuvre pour un assemblage de grande précision de composants optiques, tels que les microlasers solides par exemple.

A titre d'illustration, la structure d'un microlaser peut comporter un empilement d'une pluralité de couches, telles que des couches de milieu actif et des couches de miroir, qui forment une cavité.

Le milieu actif peut être pompé par une diode reportée directement sur la cavité ou qui y est reliée par une fibre optique.

L'invention peut ainsi être mise à profit pour assembler différents éléments d'un microlaser, ou pour assembler le microlaser avec d'autres composants, optiques afin de constituer des circuits optiques. Elle peut aussi être mise en oeuvre pour d'autres applications optiques ou mécaniques qui nécessitent un bon parallélisme entre les pièces assemblées et une bonne tenue mécanique.

Enfin, l'invention peut être appliquée à la réalisation collective de composants identiques ou différents à partir d'une structure résultant de l'assemblage de plusieurs éléments traités séparément.

### Etat de la technique antérieure

Parmi les techniques usuelles d'assemblage de pièces, dans le cadre des applications de micro-mécanique, de micro-optique ou de micro-électronique, on distingue en particulier l'assemblage par adhérence moléculaire, l'assemblage par diffusion et l'assemblage par collage.

La technique d'assemblage par adhérence moléculaire est bien connue dans le domaine de l'optique pour solidariser des éléments polis avec de faibles écarts de planéité.

On peut se reporter à ce sujet, par exemple, au document (1) dont la référence est précisée à la fin de la description.

L'assemblage comprend pour l'essentiel une étape de préparation d'une face d'assemblage sensiblement plane sur chacun des éléments, puis une étape consistant à mettre en contact les faces d'assemblage préparées, en appliquant éventuellement une légère pression.

Les deux pièces adhèrent alors l'une à l'autre par des forces d'adhérence moléculaire qui s'exercent entre les faces d'assemblage.

La technique d'assemblage par adhérence moléculaire est particulièrement avantageuse pour la réalisation collective de composants optiques dont des parties constitutives sont réalisées séparément sur des plaques de substrat distinctes. Ces plaques sont alors assemblées avant d'être découpées pour individualiser les composants.

Or, lorsque les substrats se présentent sous la forme de plaques, le contact direct des faces d'assemblage permet de garantir un très bon contrôle du parallélisme de celles-ci, et donc un bon alignement optique des parties constitutives des composants.

Toutefois, l'intensité des forces d'adhérence moléculaire peut s'avérer insuffisante dans un certain nombre d'applications dans lesquelles la structure, obtenue par adhérence des éléments, est soumise à des contraintes mécaniques ou thermo-mécaniques.

Tel est le cas, par exemple, lorsque les matériaux des éléments mis en contact présentent une importante différence de coefficients de dilatation thermique.

Une adhérence moléculaire faible peut aussi être due à la nature physico-chimique des faces d'assemblage mises en contact.

Enfin, les contraintes mécaniques engendrées par le découpage de plaques préalablement assemblées, pour individualiser des composants, peuvent compromettre l'adhérence entre les parties qui constituent lesdits composants.

Les parties constitutives des composants découpés, présentent une surface de contact relativement faible devant leur épaisseur. Elles risquent ainsi de se dissocier, par exemple, sous l'effet de scies diamantées refroidies par de l'eau sous pression. De telles scies sont en effet utilisées pour découper les plaques de substrat de façon sensiblement perpendiculaire à leurs faces principales.

La technique d'assemblage par diffusion ("diffusion bonding") présente sensiblement les mêmes avantages que la technique d'assemblage par adhérence moléculaire décrite ci-dessus.

Dans le cas de la technique d'assemblage par diffusion, la mise en contact des éléments est également précédée par la préparation des faces d'assemblage. Cette préparation comporte en particulier le polissage et le nettoyage des faces. Après la mise en contact des faces d'assemblage, le procédé est poursuivi par un traitement thermique à haute température.

Les éléments à assembler peuvent être des matériaux cristallins et/ou des céramiques et/ou des matériaux vitreux. Dans le cas des matériaux vitreux, le traitement thermique est opéré à une température supérieure de l'ordre de 10°C à la température de transition vitreuse la plus faible des matériaux utilisés. On peut se reporter à ce sujet au document (2) dont la référence est précisée également à la fin de la description.

En raison du traitement thermique, l'assemblage par diffusion n'est généralement mis en oeuvre que pour des éléments à assembler qui sont en des matériaux identiques ou présentant des coefficients de dilatation thermique très voisins. Selon le document (2) en particulier, l'écart des coefficients de dilatation thermique ne devrait pas excéder ±5.10⁻⁷/°C.

En outre, si les coefficients de dilatation des matériaux sont distincts, la méthode d'assemblage par diffusion doit être réservée à l'assemblage d'éléments de petite taille et de faible surface de contact, tels que des plaques de quelques millimètres de côté ou d'un diamètre maximum de 10 à 15 millimètres.

La troisième technique d'assemblage évoquée, c'est-à-dire la technique d'assemblage par collage, consiste à mettre en place entre les éléments à assembler un matériau liant intermédiaire. Il s'agit, par exemple, d'une colle, qui assure la cohésion de la structure.

L'usage de colle permet de simplifier la préparation des faces d'assemblage et de tolérer des différences de coefficients de dilatation thermique plus importants.

Cependant, dans le cas d'éléments sous forme de plaquettes, la colle compromet le contrôle précis du parallélisme des faces principales et introduit en général des pertes en transmission pour les applications optiques.

En particulier, il n'est pas possible d'assembler des plaquettes à usage optique dont les faces principales doivent être parfaitement planes et parallèles entre elles.

Cette difficulté exclut la technique d'assemblage par collage pour un grand nombre d'applications dans les domaines de la micro-optique et la micro-mécanique.

On connaît par le document FR-A-1 210 562 un procédé de fixation de plaques de verre sur un support par collage. La partie plane du support est munie de trous débouchant dans cette partie plane et remplis de colle.

### EXPOSÉ DE L'INVENTION

L'invention a pour but de proposer un nouveau procédé d'assemblage ne représentant pas les difficultés ou limitations des procédés exposés ci-dessus.

En particulier un but est de proposer un procédé de réalisation de composants par assemblage utilisable pour assembler des plaquettes et garantissant un excellent parallélisme de leurs faces principales.

Un autre but est de proposer un procédé permettant une meilleure tolérance de choix des matériaux des éléments à assembler, notamment en ce qui concerne leurs éventuelles différences de coefficients de dilatation thermique.

Un but est également de proposer un procédé d'assemblage adapté à la fabrication collective d'une pluralité de composants et en particulier de composants optiques ou optoélectroniques.

Enfin, un but est de proposer un procédé d'assemblage et un dispositif obtenu au terme du procédé, dans lesquels les forces d'adhérence entre les éléments assemblés sont suffisantes pour offrir une bonne tenue à des contraintes mécaniques telles que les contraintes de sciage, par exemple.

Pour atteindre ces buts, l'invention a plus précisément pour objet un procédé et un dispositif tels que définis dans les revendications.

On entend par contact intime, une adhérence résultant de forces de liaison qui s'exercent directement entre les faces d'assemblage en l'absence de matériau liant ajouté. Le contact intime peut être réalisé en particulier par adhérence moléculaire ou par assemblage par diffusion.

Grâce au procédé de l'invention, des éléments tels que des plaques à faces parallèles planes peuvent être assemblés en garantissant parfaitement le parallélisme des faces dans la structure finalement obtenue.

En effet, comme la mise en contact des faces d'assemblage a lieu avant la mise en place de la colle, l'assemblage lors de l'étage b) du procédé est un assemblage direct du type à contact intime. L'absence de matériau de liaison au niveau de l'interface entre les faces d'assemblage en contact, permet de conserver parfaitement le parallélisme de ces faces.

La colle mise en place dans les ouvertures relie la face d'assemblage de l'un des éléments, qui affleure au fond des ouvertures, aux parois latérales des ouvertures pratiquées dans l'autre élément. Elle contribue à renforcer l'adhérence entre les éléments et leur résistance aux contraintes mécanique et thermo-mécanique.

Ainsi, des éléments en des matériaux présentant une différence de coefficient de dilatation thermique aussi importantes que 6.2.10⁻⁶/°C voire davantage, peuvent être assemblés.

Les étapes du procédé sont de préférence mises en oeuvre dans l'ordre indiqué ci-dessus. Il est toutefois possible de réaliser l'étape b) de mise en contact avant la formation des ouvertures. Par ailleurs, on peut également réaliser l'étape de mise en place d'une colle dans les ouvertures avant l'étape b). A titre d'exemple, on peut déposer du matériau fusible, notamment sous forme de billes, dans les ouvertures. Un traitement thermique après l'étape b) d'assemblage permet, par fluage du matériau fusible, un contact avec une partie de chacun des éléments.

Pour garantir une bonne adhérence moléculaire lors de l'étape b), cette étape peut être précédée par une étape de préparation des faces d'assemblage pour favoriser leur adhérence, l'étape de préparation comportant, par exemple, un polissage et/ou un traitement physico-chimique.

Le volume de colle mis en place dans les ouvertures peut être ajusté pour être supérieur à un volume des ouvertures, de façon à recouvrir de colle tout ou partie de la face libre d'au moins l'un des éléments.

Dans ce cas, la partie de colle qui déborde peut constituer une couche de protection de la face libre de l'un au moins des éléments.

Par ailleurs, le procédé de l'invention peut être complété, postérieurement à l'étape c), par une étape de planarisation de la face libre d'au moins l'un des éléments.

La planarisation peut être poursuivie jusqu'à l'élimination totale de la couche de colle qui dépasse des ouvertures sur la face libre, ou simplement pour égaliser et rendre plane la couche de colle, sans l'éliminer complètement.

A titre d'alternative, on peut aussi mettre en place dans chaque ouverture un volume de colle inférieur au volume de ladite ouverture.

En particulier, puisque l'invention est appliquée à la fabrication collective de composants, le procédé comporte en outre, après la mise en place de la colle, une étape de découpage des éléments. Le découpage est effectué selon des plans sensiblement perpendiculaires aux faces d'assemblage et passant dans lesdites ouvertures garnies de colle, pour individualiser des composants.

Le découpage selon des plans passant dans les ouvertures, c'est-à-dire qui traversent la colle dans les ouvertures, permet non seulement d'optimiser l'utilisation de la surface utile des éléments, mais permet également de soulager partiellement les interfaces d'adhérence, des contraintes de sciage.

Les ouvertures destinées à recevoir la colle peuvent être pratiquées soit dans un seul des éléments à assembler soit dans plusieurs éléments.

En particulier, lors de l'étape a), on peut former des ouvertures dans chacun des éléments. Dans ce cas, après la mise en contact, les ouvertures de chaque élément débouchent, au moins en partie, sur la face d'assemblage de l'élément associé.

Au moins l'un des éléments comporte une zone active, c'est-à-dire une zone comprenant ou formant au moins un composant optique électronique ou autre. Dans ce cas, les ouvertures sont pratiquées en dehors de la, ou des, zones actives.

D'autres caractéristiques et avantages de l'invention ressortiront mieux de la description qui va suivre, en référence aux figures des dessins annexés. Cette description est donnée à titre purement illustratif et non limitatif.

### Brève description des figures

- La figure 1 est une représentation schématique en perspective de deux plaques de substrat susceptibles d'être assemblées conformément à l'invention.
- Les figures 2, 3 et 4A sont des coupes schématiques planes de plaques de substrat, comparables à celles de la figure 1, et illustrent des étapes d'un procédé d'assemblage conforme à l'invention.
- La figure 4B est une coupe schématique plane de plaques de substrat, et illustre une étape d'assemblage constituant une variante par rapport à la figure 4A.
- La figure 5 est une représentation schématique en perspective d'un composant obtenu par découpage d'une structure formée des plaques représentées à la figure 4A.
- La figure 6 est une représentation schématique en perspective d'une autre paire de plaques de substrat, susceptible d'être assemblée conformément à l'invention.
- La figure 7 est une représentation schématique partielle, en perspective, des plaques de la figure 6 après mise en contact.
- Les figures 8 et 9 sont des coupes schématiques planes de plaques de substrat, comparables à celles des figures 6 et 7, et illustrent des étapes subséquentes d'un procédé d'assemblage conforme à l'invention, et constituent une variante par rapport aux figures 3, 4A et 4B.

### Description détaillée de modes de mise en oeuvre de l'invention

Les figures décrites ci-après illustrent l'assemblage de deux éléments qui se présentent comme deux plaques de substrat en forme de disques.

Pour des raisons de commodité, l'une des plaques, et en particulier la plaque inférieure sur les figures, est désignée par substrat et la deuxième plaque est désignée par superstrat.

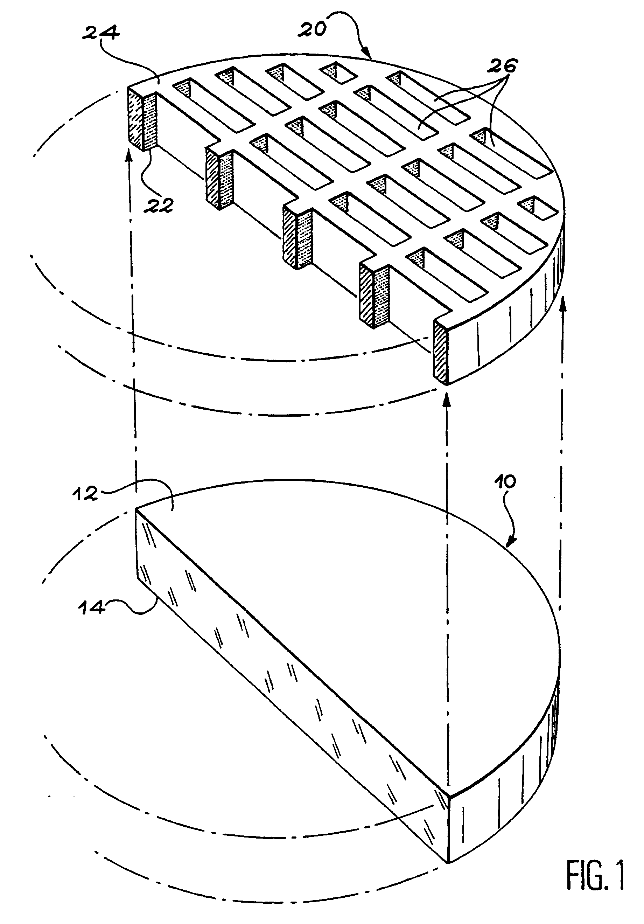

Sur la figure 1, le substrat 10 et le superstrat 20 présentent chacun deux faces principales planes et parallèles. Les références 12 et 22 désignent respectivement des faces d'assemblage du substrat et du superstrat ; et les références 14 et 24 désignent respectivement des faces libres, opposées et parallèles aux faces d'assemblage.

Dans l'exemple illustré le superstrat 20 est par exemple une plaque d'un cristal de YAG:Nd (Y₃Al₅O₁₂ dopé au néodime) ou de verre phosphate dopé à l'erbium (Er), destinée à former les zones actives d'une pluralité de composants "laser".

Le superstrat peut aussi être une plaque de silicium dans laquelle des composants sont formés préalablement ou postérieurement à l'assemblage.

Selon une autre possibilité, le superstrat peut être un superstrat reconstitué formé de puces ou de barrettes de matériau, associées ou non à des espaceurs et enrobées dans un liant tel qu'une résine.

Le substrat 10 est par exemple une plaque de YAG dopé Cr⁴⁺ qui permet, lorsqu'il est associé au superstrat en YAG dopé Nd, d'obtenir un laser impulsionnel à déclenchement passif à λ=1064 nm.

Selon un autre exemple, le substrat peut aussi être un cristal de LMA dopé au cobalt (LaMgAl₁₁O₁₉). Celui-ci permet, lorsqu'il est associé à un superstrat en verre dopé Er, d'obtenir un laser impulsionnel à déclenchement passif à λ=1055 nm.

Dans une première étape, illustrée par la figure 1, on pratique dans le superstrat 20 un certain nombre d'ouvertures 26 agencées selon un motif géométrique.

Le pas des ouvertures détermine la taille des zones actives et est choisi en fonction des composants que l'on souhaite finalement réaliser.

Les ouvertures peuvent être rectangulaires, comme sur la figure, mais peuvent aussi être circulaires ou d'une autre forme.

Les ouvertures qui s'étendent depuis la face libre 24 jusqu'à la face d'assemblage 22 peuvent être pratiquées par perçage, par exemple par laser, par gravure chimique ou par un traitement d'usinage tel que le rodage par ultrason.

Dans le cas où le superstrat est constitué de puces enrobées dans un liant, les ouvertures sont de préférence pratiquées dans le liant, en dehors des puces.

La première étape, illustrée par la figure 1, comporte également un polissage ou un traitement physico-chimique par exemple d'hydrophilisation des faces d'assemblage 12 et 22 des substrat et superstrat de façon à favoriser leur adhérence moléculaire ultérieure.

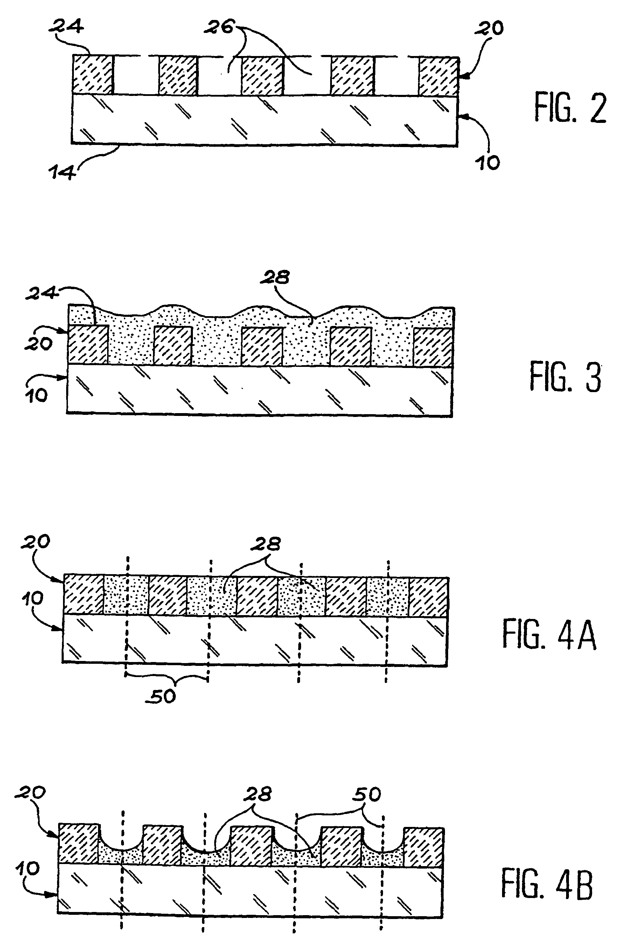

La figure 2 montre une deuxième étape lors de laquelle les substrat 10 et superstrat 20 sont superposés de façon à mettre en contact leurs faces d'assemblage respectives.

Comme les faces d'assemblage sont sensiblement planes et propres, leur mise en contact provoque automatiquement leur solidarisation par des forces d'adhérence moléculaire. Il est néanmoins possible d'exercer une légère pression sur les substrat et superstrat pour favoriser l'adhérence. Par ailleurs, lorsque les matériaux des substrat et superstrat présentent des coefficients de dilatation thermique identiques ou voisins, la mise en contact des faces d'assemblage peut être effectuée à température ambiante ou à une autre température supérieure ou inférieure, et peut être suivie éventuellement d'un traitement thermique, pour renforcer l'adhérence et éventuellement effectuer de la diffusion thermique comme décrit précédemment. Un traitement thermique permet en effet de renforcer la liaison entre les faces d'assemblage.

Sur la figure 2, on observe que les ouvertures 26 du superstrat 20 forment désormais des cavités dont le fond est constitué par la face d'assemblage du substrat 10. Les cavités, dont les dimensions ne sont pas respectées pour simplifier la figure, sont également repérées avec la référence 26.

Une troisième étape, illustrée par la figure 3, comprend l'enduction du superstrat d'une colle 28 qui vient combler les cavités 26 et qui déborde sur la face libre 24, de façon à la recouvrir.

La colle est par exemple une colle polymérisable par un rayonnement ultraviolet ou une colle à deux composants, polymérisable à froid ou à chaud. Elle peut être "dopée", c'est-à-dire chargée de particules, telles que des particules de silice ou d'aluminium, qui limitent le retrait de la colle lors de sa polymérisation.

La mise en place de la colle peut avoir lieu éventuellement sous presse pour garantir le bon remplissage des cavités 26.

Comme le montre la figure 4A, la troisième étape peut être complétée par une étape (de planarisation) qui consiste à rectifier la planéité du superstrat 20 après la mise en place de la colle.

Dans l'exemple illustré, un polissage de la face libre est poursuivi jusqu'à mettre à nu le superstrat, c'est-à-dire jusqu'à ce que la colle qui recouvre la face libre 24 soit éliminée.

La figure 4A indique également des plans de découpage 50 selon lesquels les substrat 10 et superstrat 20 peuvent être découpés pour individualiser des composants.

Sur la figure 4A, seuls des plans de découpage 50 perpendiculaires au plan de la figure sont visibles. D'autres plans de découpage parallèles au plan de la figure sont également prévus.

On observe que les plans de découpage 50 sont sensiblement perpendiculaires aux faces libres et aux faces d'assemblage des substrat et superstrat et passent dans les ouvertures 26 du superstrat.

La figure 4B montre une variante du procédé dans laquelle les cavités 26 ne sont pas entièrement emplies de colle.

Dans l'exemple de la figuré 4B, un volume mesuré de colle, inférieur au volume des cavités est mis en place dans chaque cavité, par exemple au moyen d'une seringue ou d'une pompe à débit contrôlé.

Ainsi, le débordement de colle en dehors des cavités est évité et l'étape de planarisation décrite en référence à la figure 4A peut être omise.

Toutefois, on observe que la colle relie les faces latérales des cavités 26, c'est-à-dire le superstrat, à la face d'assemblage 12 du substrat. Elle contribue ainsi à assurer une excellente adhérence entre ces parties.

Sur la figure 4B, la référence 50 indique également des plans de découpage.

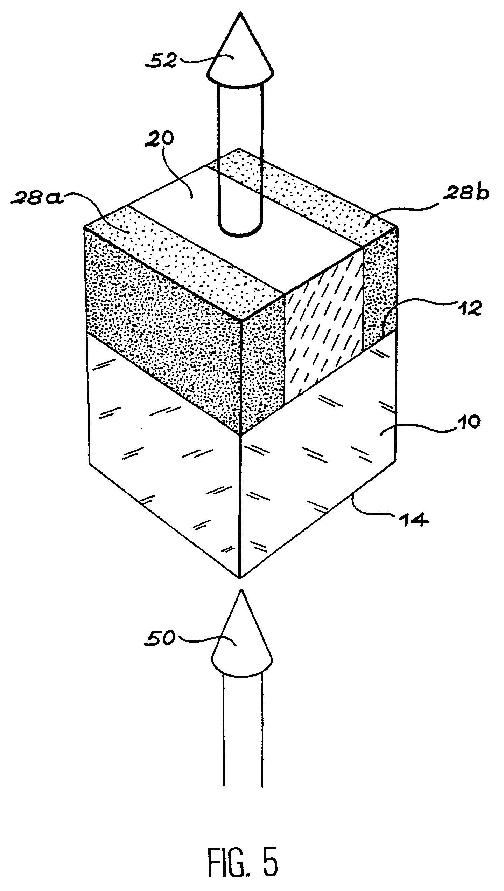

La figure 5 montre une puce laser obtenue après découpage de la structure de la figure 4A.

La puce comporte une partie du superstrat 20 qui constitue la zone active du laser. Celle-ci est supportée par une partie du substrat 10 choisi en un matériau transparent à une lumière de pompe. Une flèche 50 indique à titre d'illustration une possibilité d'application de la lumière de pompe.

De la même façon, une flèche 52 représente un faisceau laser émis par la cavité.

On observe également que des renforts de colle 28a, 28b tapissent les parois latérales de la partie formant la zone active, et adhérent sur la face d'assemblage 12 du substrat, de part et d'autre de la zone active.

La colle contribue ainsi non seulement à protéger la zone active mais renforce également l'adhérence entre celle-ci et le substrat. Comme indiqué précédemment, cette caractéristique permet d'utiliser pour les parties constitutives du composant des matériaux présentant des coefficients de dilatation thermique différents.

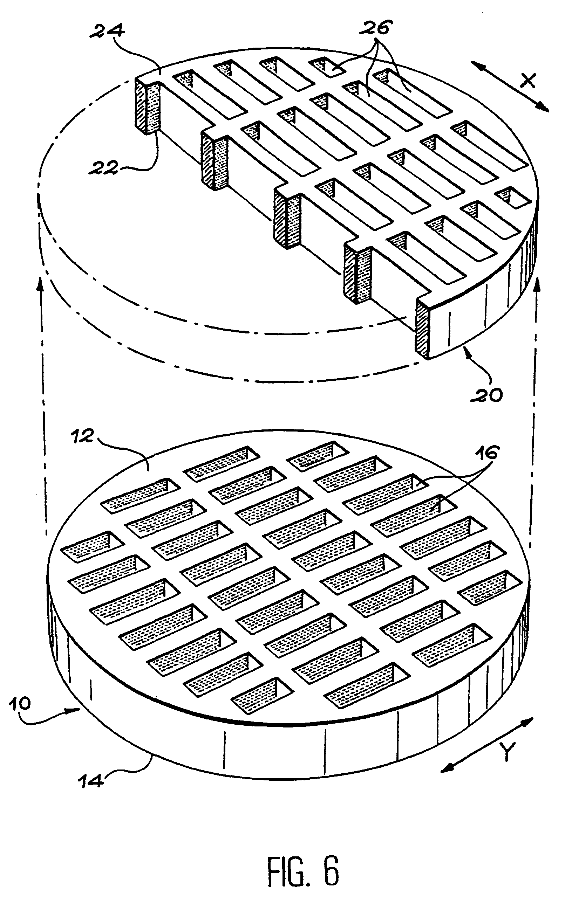

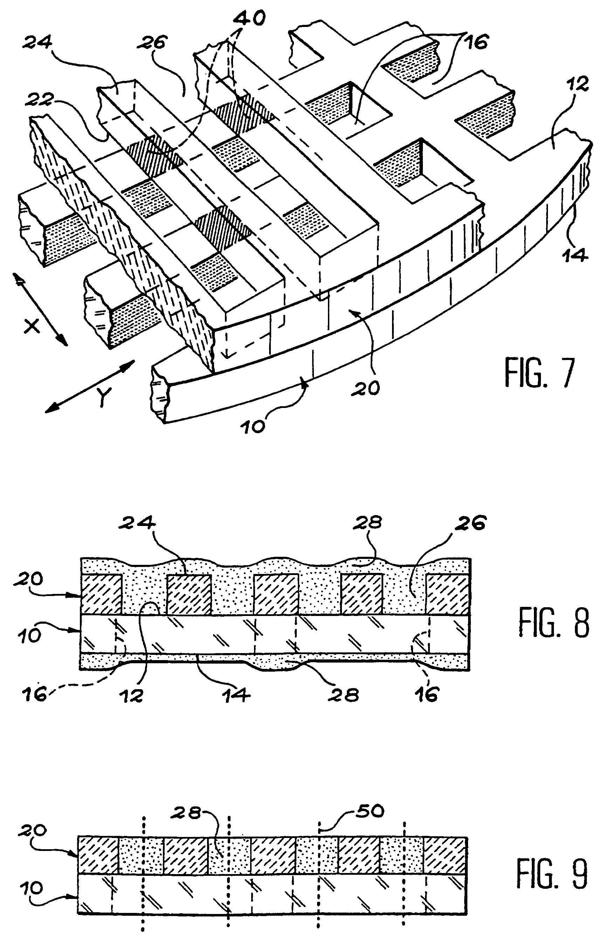

Les figures 6 à 9, décrites ci-après, illustrent une variante du procédé dans laquelle chacun des éléments assemblés comporte des ouvertures pour la mise en place de colle. Pour des raisons de simplification, les parties des figures 7 à 9, identiques, similaires ou équivalentes à celles des figures précédemment décrites portent les mêmes références. On peut ainsi se reporter à la description qui précède.

Le superstrat 20 de la figure 6 présente un certain nombre d'ouvertures allongées et traversantes 26, qui sont agencées selon un motif et un pas régulier, et qui sont orientés selon une première direction notée X sur la figure

Le substrat 10 présente de la même façon des ouvertures traversantes et allongées 16. Les ouvertures 16 sont également agencées selon un motif régulier et sont orientées sur la figure selon une deuxième direction Y.

Les ouvertures 16 du substrat 10 sont comparables aux ouvertures 26 du superstrat 20 : elles s'étendent de puis la face libre 14 jusqu'à la face d'assemblage 12 pour y déboucher.

La figure 7 montre l'assemblage du substrat 10 avec le superstrat 20, de façon à mettre en contact leurs faces d'assemblage.

Le substrat et le superstrat sont assemblés de telle manière que les directions X et Y mentionnées ci-dessus soient croisées, et de préférence perpendiculaires.

Ainsi, chaque ouverture 26 du superstrat débouche au moins en partie sur une portion de la face d'assemblage du substrat et chaque ouverture 16 du substrat débouche au moins en partie sur une portion de la face d'assemblage du superstrat.

Les ouvertures du substrat et du superstrat peuvent aussi communiquer en partie.

De la même façon, une partie de la face d'assemblage du superstrat vient en contact avec une partie de la face d'assemblage du substrat de telle façon qu'une adhérence puisse avoir lieu entre ces parties 40 de face d'assemblage. les parties en contact 40 définissent un plan appelé plan d'adhérence.

La figure 8 montre la mise en place d'un liant 28, tel qu'une colle, dans les ouvertures 16, 26 à partir des faces libres.

La colle emplit les ouvertures et déborde sur les faces libres de façon à les recouvrir. On peut se reporter à ce sujet à la figure 4A par exemple.

Enfin, la figure 9 montre une étape optionnelle de « planarisation » des faces libres. Elle indique également des plans 50 de découpage qui traversent les ouvertures.

Le découpage est réalisé par exemple au moyen d'une scie diamantée.

### DOCUMENTS CITES

***(1)***
   FR-A-2 751 467
***(2)***
   US-A-5 441 803

## Revendications

1. Procéde de réalisation de composants par assemblage d'au moins deux éléments (10, 20) présentant chacun une face d'assemblage (12, 22) sensiblement plane et dont au moins l'un comporte des zones actives comprenant ou formant chacune au moins un composant; le procédé comportant les étapes suivantes :
a) la formation d'ouvertures (16, 26) dans au moins l'un des éléments (20), en dehors des zones actives, les ouvertures s'étendant depuis la face d'assemblage jusqu'à une face libre (14, 24) opposée à la face d'assemblage,
b) la mise en contact de la face d'assemblage dudit élément avec la face d'assemblage d'au moins un deuxième élément (10) de façon à obtenir une adhérence par contact intime,
c) la mise en place d'une colle (28) dans lesdites ouvertures depuis la face libre, de façon que la colle soit en contact avec une partie de chacun des éléments,
d) le découpage des éléments selon des plans de découpage (50) sensiblement perpendiculaires aux faces d'assemblage et passant dans lesdites ouvertures garnies de colle, pour individualiser les composants.

2. Procédé selon la revendication 1, dans lequel les étapes ont lieu dans l'ordre indiqué.

3. Procédé selon la revendication 1, dans lequel l'étape b) de mise en contact est réalisée avant l'étape a) de formation d'ouvertures.

4. Procédé selon la revendication 1, dans lequel l'étape c) de mise en place d'une colle dans les ouvertures est réalisée avant l'étape b) de mise en contact.

5. Procédé selon la revendication 1, dans lequel l'étape b) de mise en contact est précédée par une étape de préparation des faces d'assemblage (12, 22) pour favoriser leur adhérence, l'étape de préparation comportant un polissage et/ou un traitement physio-chimique.

6. Procédé selon la revendication 1, dans lequel on met en place un volume de colle supérieur à un volume des ouvertures de façon à recouvrir de colle tout ou partie de la face libre (14, 24) d'au moins l'un des éléments.

7. Procédé selon la revendication 6, comprenant postérieurement à l'étape c) une étape de planarisation de la face libre d'au moins l'un des éléments.

8. Procédé selon 1a revendication 1, dans lequel on met en place dans chaque ouverture (26) un volume de colle inférieur au volume de ladite ouverture.

9. Procédé selon la revendication 1, dans lequel les composants sont des activités de microlasers.

10. Procédé selon la revendication 1, dans laquelle les ouvertures (16, 26) sont agencées selon un motif régulier.

11. Procédé selon la revendication 1, dans lequel, lors de l'étape a), on forme des ouvertures dans chacun des éléments, les ouvertures de chaque élément débouchant au moins en partie sur la face d'assemblage d'un autre élément après mise en contact des éléments.

12. Dispositif comprenant un premier et un deuxième éléments assemblés mutuellement selon un plan d'adhérence, dans lequel au moins l'un des éléments est traversé de part en part par au moins une ouverture (26) qui s'étend jusqu'au plan d'adhérence et qui est garnie de colle, **caractérisé en ce que** au moins l'un des éléments comporte des composants enrobés dans un liant, les ouvertures étant pratiquées dans ledit liant.

13. Dispositif selon la revendication 12, dans lequel le substrat comporte une pluralité d'ouvertures agencées selon un pas régulier.

## Claims

1. Process for producing components by the assembly of at least two elements (10, 20) each with a substantially planar assembly face (12, 22) and whereof at least one has active zones, comprising or forming in each case at least one component, the process comprising the following steps:
a) formation of openings (16, 26) in at least one of the elements (20), the openings extending from the assembly face to a free face (14, 24) opposite the assembly face,
b) bringing the assembly face of the said element into contact with the assembly face of at least one second element (10) to obtain bonding by intimate contact,
c) putting glue (28) in said openings from the free face, such that the glue is in contact with a part of each of the elements,
d) the cutting of elements along cutting planes (50) substantially perpendicular to the assembly faces and passing into said glue-coated openings in order to individualize the components.

2. Process according to claim 1, wherein the steps take place in the indicated order.

3. Process according to claim 1, wherein contacting step b) is carried out before step a) in which the openings are formed.

4. Process according to claim 1, wherein step c) in which glue is placed in the openings is carried out before contacting step b).

5. Process according to claim 1, wherein contacting step b) is preceded by a step in which the assembly faces (12, 22) are prepared to improve their adherence, the preparation step including polishing and/or a physicochemical treatment.

6. Process according to claim 1, wherein a volume of glue greater than the volume of the openings is put into place in order to cover with glue all or some of the free face (14, 24) of at least one of the elements.

7. Process according to claim 6, comprising a planarization step of the free face of at least one of the elements, after step c).

8. Process according to claim 1, wherein a volume of glue less than the volume of the said opening is put into each opening (26).

9. Process according to claim 1, wherein the components are microlaser cavities.

10. Process according to claim 1, wherein the openings (16, 26) are laid out according to a regular pattern.

11. Process according to claim 1, wherein openings are formed in each element in step a), the openings in each element opening up at least partly to the assembly face of another element after the elements are put into contact.

12. Device comprising a first and a second elements assembled with one another along a bond plane, wherein at least one of the elements is completely traversed by at least one opening (26) extending up to the bond plane and which is coated with glue, **characterized in that** at least one of the elements has components coated with a binder, the openings being made in said binder.

13. Device according to claim 12, wherein the substrate has a plurality of openings arranged with a regular pitch.

## Patentansprüche

1. Verfahren zur Herstellung von Bauteilen durch Verbindung von wenigstens zwei Elementen (10, 20), von denen jedes eine im Wesentlichen plane Verbindungsfläche (12, 22) aufweist und von denen wenigstens das eine aktive Zonen umfasst, von denen jede mindestens ein Bauteil enthält; wobei das Verfahren die folgenden Schritte umfasst:
a) Ausbilden von Öffnungen (16, 26) in wenigstens einem der Elemente (20) außerhalb der aktiven Zonen, wobei die Öffnungen sich von der Verbindungsfläche bis zu einer der Verbindungsfläche entgegengesetzten freien Fläche (14, 24) erstrecken,
b) Kontakt herstellen zwischen der Verbindungsfläche des genannten Elements und der Verbindungsfläche von wenigstens einem zweiten Element (10), um durch engen Kontakt eine Haftung zu erzielen,
c) Anbringen eines Klebstoffs (28) in den genannten Öffnungen, von der freien Fläche aus, so dass der Klebstoff mit einem Teil von jedem der Elemente Kontakt hat,
d) Zerschneiden der Elemente gemäß Schnittebenen (50), die im Wesentlichen senkrecht sind zu den Verbindungsflächen und in den mit Klebstoff versehenen Öffnungen verlaufen, um die Bauteile zu individualisieren.

2. Verfahren nach Anspruch 1, bei dem die Schritte in der angegebenen Reihenfolge stattfinden.

3. Verfahren nach Anspruch 1, bei dem der Kontaktherstellungsschritt b) vor dem Öffnungsausbildungsschritt a) erfolgt.

4. Verfahren nach Anspruch 1, der Klebstoffanbringungsschritt c) vor dem Kontaktherstellungsschritt b) erfolgt.

5. Verfahren nach Anspruch 1, bei welchem dem Kontaktherstellungsschritt b) ein Schritt zur Vorbereitung der Verbindungsflächen (12, 22) vorausgeht, um ihre Haftung zu begünstigen, wobei dieser Vorbereitungsschritt eine Politur und/oder eine physikalischchemische Behandlung umfasst.

6. Verfahren nach Anspruch 1, bei dem man ein Klebstoffvolumen anbringt, das größer ist als ein Volumen der Öffnungen, um die freie Fläche (14, 24) wenigstens eines der Elemente ganz oder teilweise mit Klebstoff zu bedecken.

7. Verfahren nach Anspruch 6, das nach dem Schritt c) einen Schritt zur Planarisierung der freien Fläche wenigstens eines der Elemente umfasst.

8. Verfahren nach Anspruch 1, bei dem man in jeder Öffnung (26) ein Klebstoffvolumen anbringt, das kleiner ist als das Volumen dieser Öffnung.

9. Verfahren nach Anspruch 1, bei dem die Bauteile aktive Mikrolaserbauteile sind.

10. Verfahren nach Anspruch 1, bei dem die Öffnungen (16, 26) nach einem gleich- bzw. regelmäßigen Muster angeordnet sind.

11. Verfahren nach Anspruch 1, bei dem man während des Schritts a) in jedem der Elemente Öffnungen ausbildet, wobei die Öffnungen jedes Elements nach der Kontaktherstellung zwischen den Elementen wenigstens teilweise an der Verbindungsfläche eines anderen Elements münden.

12. Vorrichtung mit einem ersten und einem zweiten Element, gegenseitig an einer Haftebene miteinander verbunden, bei der wenigstens eines der Elemente von einer Seite zur anderen von mindestens einer Öffnung durchquert wird, die sich bis zu der Haftebene erstreckt und die mit Klebstoff versehen ist,
**dadurch gekennzeichnet,**
**dass** wenigstens eines der Elemente in ein Bindemittel eingebettete Bauteile umfasst, wobei die Öffnungen in dem genannten Bindemittel realisiert sind.

13. Vorrichtung nach Anspruch 12, bei dem das Substrat eine Vielzahl einer gleichmäßigen Teilung entsprechende Öffnungen umfasst.
